# EUROPEAN PATENT SPECIFICATION

(11) **EP 3 212 444 B1**
(45) Date of publication and mention of the grant of the patent: **28.08.2019**
(21) Application number: 15797419.7
(22) Date of filing: 15.10.2015
(51) Int. Cl.: B60C 11/24, B60C 13/02

(54) **TYRE FOR HEAVY LOAD VEHICLE WHEELS.**
REIFEN FÜR SCHWERLASTFAHRZEUGRÄDER
PNEU POUR ROUES DE VÉHICULE DE TYPE À CHARGE LOURDE

(30) Priority: 30.10.2014 IT RM20140618
(43) Date of publication of application: 06.09.2017
(73) Proprietor: Pirelli Tyre S.p.A., 20126 Milano (IT)
(72) Inventor: CANEVINI, Laura, I-20126 Milano (IT); MINOLI, Claudio, I-20126 Milano (IT); LORENZETTI, Daniele, I-20126 Milano (IT)
(74) Representative: Fabiano, Piero
(86) International application number: PCT/IB2015/057919
(87) International publication number: WO 2016/067149

(56) References cited:
- FR-A1- 2 131 874
- JP-A- H0 924 710
- JP-A- 2008 174 139

## Description

### FIELD OF THE INVENTION

The present invention relates to a tyre provided with a sidewall wear indicator. Preferably, the present invention applies to a tyre for heavy load vehicle wheels and more preferably to a tyre for bus or heavy load vehicle wheels for mainly urban use.

In general, the heavy load vehicles, targeted to passengers transport, or the buses in particular in urban areas, for allowing easier bus boarding, shall approach as possible the sidewalk.

In some countries, it is even the legislation that, for security reasons, requires that the driver approaches the vehicle to sidewalk up to make the sidewall of the tyre in contact thereto.

For heavy load vehicles, approaching the quay of a storage place is sometimes a requirement for easing the unloading and/or loading of goods.

These manoeuvres generate repeated frictions of the tyre sidewalls against the sidewalk, causing the wear of the sidewalk itself. Therefore, the sidewalk is subject to a wearing for abrasion. This phenomenon is a prerogative of this particular use and is so important that it conditions the lifetime of the tyre. In fact, sometimes can happen to disassemble tyres from the vehicle, for alienating them or for reconstructing them, when the tread is not yet completely worn, since the sidewall results on the contrary totally worn, and dangerously exposes the internal structure of the tyre.

Further to the provision of a sidewall reinforcement layer that allows delaying the onset of the aforementioned drawbacks, it is important to monitor the integrity status of the sidewalls through appropriate wear indicators.

### BACKGROUND ART

Documents JP4-129806, WO2013/118657, EP726173, JP2013023016, JP09024710 and JP2008/174139 refer to known wear indicators for the sidewall of tyres for heavy load vehicle wheels.

### SUMMARY OF THE INVENTION

The Applicant has noticed that in general the known art solutions, like those disclosed in the aforementioned documents, involve, as sidewall wear indicators, apertures in a form of circumferential grooves or holes, arranged on the sidewall itself, shaped in such a way to allow to measure, for example with a depth gauge, the abraded amount of compound relative to the new tyre. Consequently, they allow measuring the amount of compound of the sidewall that rests before reaching the minimum thickness for which is convenient and/or necessary to disassemble the tyre.

The Applicant has anyway observed that the presence of circumferential grooves, typically shallow for not excessively weaken the compound of the sidewall, seems not be capable to provide sufficiently precise indications as the wearing increases. On the other hand, the presence of holes would create sudden discontinuities on the side, precisely in the area that is subject to the continuous deformations generated by the cyclic passage of the zone under footprint, wherein the sidewall is subject to maximal flexion, to the opposite zone, wherein the sidewall results extended.

The aforementioned cyclic motion generates great and concentrated stresses, particularly in the zones of discontinuity of the thickness of the sidewall (that is to say in correspondence of the hole-shaped wear indicators). All this translates in cracks, due to material fatigue, that, in turn, can undermine the structural integrity of the sidewall itself, reducing the lifetime of the tyre.

The Applicant has also noticed that for trying to solve the problem of the concentrated stresses in correspondence of the sidewall wear indicators some of the proposed solutions, in the aforementioned prior art documents, provide to increase the size of the indicators themselves.

The Applicant has anyway observed that the more the indicator is wide, the more is extended the portion of sidewall not protected by an adequate thickness of compound and at the same time the more the thickness of compound available for absorbing the cyclic stresses during the traveling gets thinner.

The Applicant has further observed that an excessive concentration of stresses localized where the volume of material is low, increases the presence of wear indicators of significant size and the increase of the number of the same. Further, the risk of lacerations due to potential impacts of the bottom of the sidewall wear indicator against edges/protrusions, like a sidewalk, stones or more increases with the increase of the size and number of the indicators themselves.

The Applicant has, therefore, set the problem of finding a sidewall wear indicator for heavy load vehicle wheels and in particular for buses or heavy load vehicle wheels used for urban use, that allows for simply evaluating the wear to which a portion of sidewall is subject after a predetermined travelling, removing or anyway sensibly reducing the risk of onset of localized tensions suitable for generating cracks on the bottom of the indicator itself.

The Applicant has, further, raised the problem of finding a sidewall wear indicator for heavy load vehicle wheels and in particular for bus or heavy load vehicle wheels for urban use, that does not present the drawbacks of the known indicators, in terms of localized tensions, and that at the same time do not excessively expose portions of the sidewall to risk of tearing or damaging by shocks against edges/protrusions.

The Applicant has found that by realizing on the sidewall a circumferential groove provided with portions with increased section, it is possible to simply and immediately detect the wear of the sidewall of the tyre reducing anyway the concentrations of the stresses that are generated by the sudden and localized variations of the thickness of the sidewall, in the zone of the wear indicator.

According to a first aspect the present invention there is the provision of a tyre according to claim 1.

The circumferential groove allows on one side to distribute the stressed due to the flexion and extension of the sidewall of the tyre over a broader zone of the sidewall, in the cyclic passage from the footprint area to the diametrically opposed zone, and at the same time allows for realizing portions with increased section of small size, but anyway sufficient to measure the residual depth with a depth gauge.

In such a way, the concentrations of the stresses due to the variation of the thickness of the sidewall in the zone of the wear indicator sensibly reduce and consequently sensibly reduce the risks of triggering cracks on the bottom of the portion with increased section.

Being no more necessary to realize wide holes as wear indicators, it is prevented the risk of lesions of the bottom of the indicator, which are due to impacts against obstacles/protrusions.

The wear indicator allows for an advantageous and immediate visualization of the state of wear of the sidewall in such a way to allow for example a fast decision about the action to undertake like the rotation of the installation of the vehicle tyres or the reconstruction of the tread band also including the sidewall or the eventual reconstruction of only the sidewall or the substitution of the tyre.

In the context of the present invention, the following definitions apply:
- By "circumferential" direction, it is meant a direction generically directed according to the rotation direction of the tyre.
- By "radial" or "radially", it is meant a direction generally moving away from the rotation axis of the tyre.

The present invention, in the aforementioned aspects, can have at least preferred features that are hereinafter described.

Preferably, at least a portion with increased section can have a circumferential extension comprised between about 3 mm and about 30 mm.

Advantageously, the first circumferential groove can have a channel depth p and the portion with increased section has a localized maximum depth P, with p<P.

Conveniently, the localized maximum depth P can be comprised in the range between 1.2p and 5p, preferably between 2p and 4p.

The present choice in terms of depth of the first circumferential groove and of the portion with increased section fulfils both the need of having an augmented portion that allows the measuring of the removed amount of compound and both to not to structurally excessively weaken the portion of sidewall wherein the wear indicators are located.

To the end of conferring flexibility to the portion of the sidewall which is most stressed for the cyclic flexion and extension, during the rolling of the tyre, without at the same time generating significant reduction of the thickness of the sidewall in this critical area, the channel depth p can be comprised between about 1 mm and about 7 mm, preferably between 2.5 mm and 5 mm.

Advantageously, at least a first circumferential groove can have a maximum width I of between about 0,5 mm and about 5mm.

Conveniently, the localized maximum depth P can be smaller than 8 mm.

Preferably, at least a first circumferential groove is arranged on the sidewall of the tyre within a range having radial extension of 80 mm comprising the point of maximum chord of said tyre.

Conveniently, at least a first circumferential groove can be located on the sidewall of the tyre which is radially external to the point of maximum chord within a range having a radial extension of 20 mm. Said first groove is in that case located between the point of maximum chord of the sidewall and the tread.

Preferably, the at least one portion with increased section has a width L (measured in a substantially radial direction along the sidewall) comprised in the range between 3 mm and 10 mm.

Advantageously, the at least one first circumferential groove can comprise a maximum of twelve angularly staggered portions with increased section.

Preferably said at least a first circumferential groove is obtained in a portion of sidewall an increased thickness.

Conveniently, the portion of sidewall an increased thickness can extend from the point of maximum chord in a direction of the tread band for at least 50 mm, preferably for at least 30 mm and in a direction of the tyre bead for a maximum of 50 mm.

Preferably the sidewall wear indicator comprises at least a second circumferential groove.

Preferably said second circumferential groove is obtained in the sidewall in a radially outer position to the first circumferential groove.

The second circumferential groove can have a constant width or can comprise at least a portion with increased section.

According to another aspect, the present invention concerns a sidewall for heavy load according to claim 14.

### BRIEF DESCRIPTION OF THE FIGURES

Further features and advantages of the invention are hereinafter shown with reference to the embodiments shown in the annexed figures as non-limiting examples, wherein:
- Fig. 1 shows a perspective view of a tyre for heavy load vehicles according to the present invention onto which is applied a sidewall wear indicator;
- Fig. 2 shows an enlarged perspective view of a portion of sidewall of the tyre of figure 1 wherein it is shown a portion of a first embodiment of a sidewall wear indicator, according to the present invention;
- Fig. 3 shows an enlarged section view of the portion of sidewall of figure 2; and
- Fig. 4 shows a section view of the tyre of figure 1.

### DETAILED DESCRIPTION OF THE EMBODIMENTS OF THE INVENTION

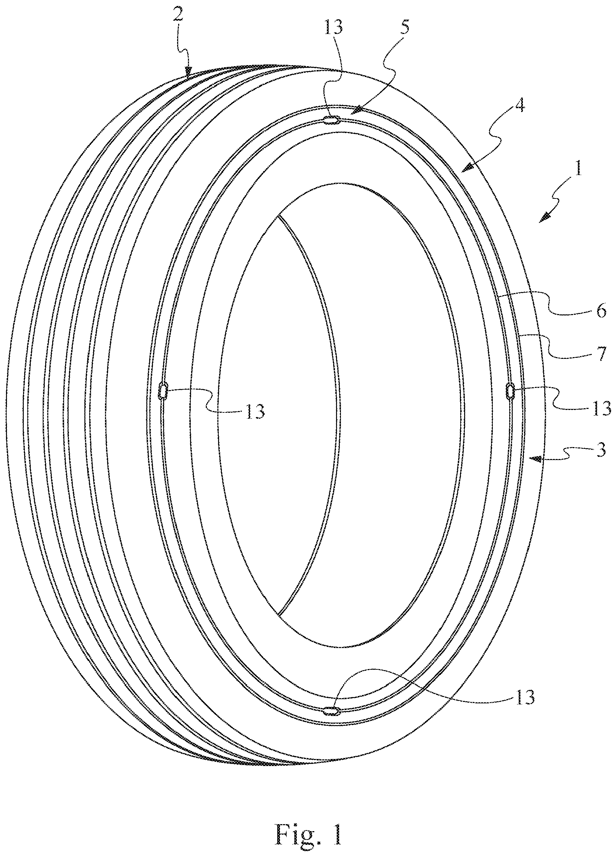

In figure 1, with the reference number 1 is shown in its complex tyre for vehicle wheels, in particular a tyre suitable to be mounted on the wheels, either steer or drive, of a heavy load vehicle.

In the following part of the present description, with the expression "tyre for heavy load vehicle wheels", it is meant a tyre suitable to be used on a vehicle belonging to the categories M2, M3, N2, N3 and O2-O4, according to "ECE 25 Consolidated Resolution of the Construction of vehicles (R.E. 3), Annex 7, Classification and definition of power driven vehicles and trailers", or to the categories M3, N2, N3, O3, O4 according to "ETRTO Engineering design information" (edit. 2010), section "General Information", pages G15 and G16, chapter "International codes for wheeled vehicle classification as UN/ECE 29/78 30 and Directive 2003/37", like for example trucks, lorries, tractors, buses, vans and other vehicle of the type.

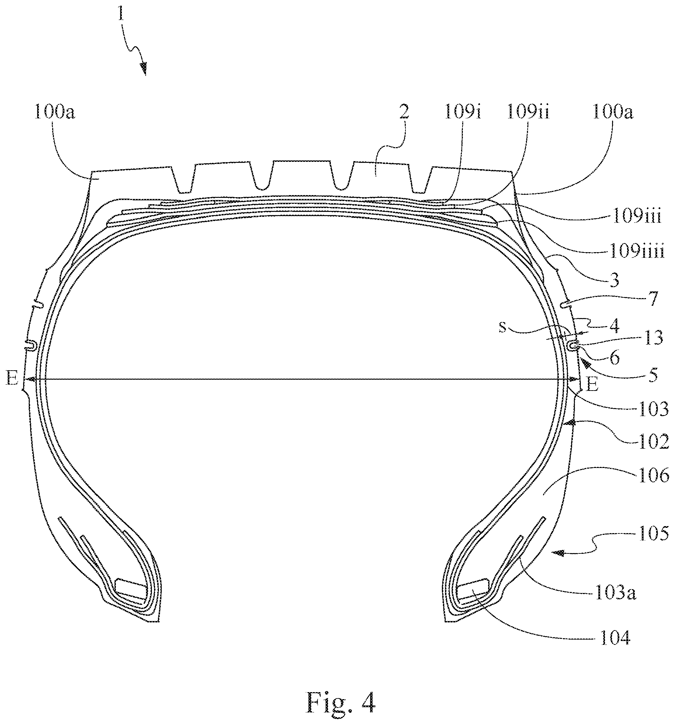

The tyre 1, as better shown in figure 4, comprises a carcass structure 102, including at least a carcass ply 103, preferably two, formed by reinforcement cords typically in metal, incorporated in an elastomeric matrix.

The carcass ply 103 has opposite end edges 103a engaged with respective bead rings 104. The latter are located in the zones 105 of the tyre 1 usually identified with the name "beads".

On the outer perimeter edge of the bead rings 104 is applied a elastomeric filling 106 that takes up the space defined between the carcass ply 103 and the respective end edge 103a of the carcass ply 103. The bead rings 104 keep the tyre 1 well fixed to an anchoring seat especially provided on the rim of the tyre, thus preventing, during operation, the exit of the bead 105 from said seat.

In correspondence of the beads 105 can be provided specific reinforcement structures (not shown) having the function of enhancing the transmission of torque to the tyre 1.

In a radially outer position respective to the carcass structure 102 is associated a belt structure 109 comprising preferably a plurality of belt layers (in the specific example illustrated four layers 109i, 109ii, 109iii, 109 iiii are shown) arranged in radial overlapping each one relative to the other and having reinforcement cords typically made of metal with a crossed orientation and/or parallel to the direction of circumferential development of the tyre 1.

Preferably, the belt structure comprises, in a radially inner position, a first main belt layer 109iiii.

In preferred embodiments, said first main belt layer 109iiii comprises a plurality of reinforcing elements oriented along a first direction inclined respective to said substantially circumferential direction. Preferably, the belt structure 109 comprises, in a radially outer position said first main belt layer 109iiii, one second main belt layer 109iii.

In preferred embodiments, said second main belt layer 109iii comprises a plurality of reinforcing elements oriented along a second direction that intersects said first direction. Preferably, the belt structure 109 comprises at least a reinforced strip-like element 109ii arranged in a radially outer position to said second layer 109iii main belt, preferably in correspondence of at least a portion of an axial end of said main belt layers.

Preferably, said at least a reinforced strip-like element 109ii comprises a plurality of reinforcing elements arranged according to a substantially circumferential direction.

Preferably the belt structure 109 comprises a stone protection layer 109i arranged in the belt structure in a radially outer position respective to the other belt layers.

In a radially outer position respective to the belt structure 109 is applied a tread band 2, in elastomeric material. The tread band is a tread band suitable for heavy load vehicles used for urban use or for buses, for said reason will not be further described.

The tread band 2, in the example shown in figure 1 and 4, comprises a central portion and two shoulder portions.

The central portion, located across the equatorial plane, comprises three circumferential ribs divided by circumferential grooves, in turn the central portion is separated from the shoulder portions by further two circumferential grooves.

On the lateral surfaces of the carcass structure 102, extending each one from one of the opposite lateral edges 100a of the tread band 2 up to the respective anchoring annular structure 104 to the beads 105, are further applied respective sidewalls 3 in elastomeric material.

In figure 1 it is shown a sidewall 3 of a tyre provided with one sidewall wear indicator 5 according to the present invention, said sidewall 3 is shown in a purely by way of example and description, but shall be intended that the wear indicators 5 of the sidewall, according to the present invention, can be applied to any type of tyre for heavy load vehicles used for urban use or for buses, without departing from the scope of protection of the present invention.

For ease of description, hereinafter reference will be made to the sidewall 3 of figure 1.

The sidewall 3 has a portion 4 an increased thickness, that is to say a portion wherein the thickness S of the sidewall itself is increased being at least the 150% of the thickness of the sidewall outside of said portion an increased thickness. The portion with increased thickness4 is in general realized with particularly rigid and wear-proof compounds. In this portion with increased thickness 4, the maximal thickness of the sidewall is greater respective to that of the heavy load vehicles not used for these applications and is greater than 7mm, preferably greater than 8 for example of about 9 mm.

The portion of sidewall 4 an increased thickness extends from the point of maximum chord of the tyre for at least 50 mm, preferably for at least 30 mm, in a direction of the tread band 2 and for a maximum of 50 mm in a direction of the bead 105 of the tyre.

In particular, in the embodiment shown in figures 1-4, the portion with increased thickness4 extends from point of maximum chord of the tyre of 50 mm in a direction of the tread band 2 and of 10 mm in a direction of tyre bead.

The portion 4 can extend dal point of maximum chord and in a direction of the tread band 2 up to arrive to the lateral edge 100a of the tread band 2.

At least one wear indicator 5 of the sidewall is arranged on the portion 4 of the sidewall.

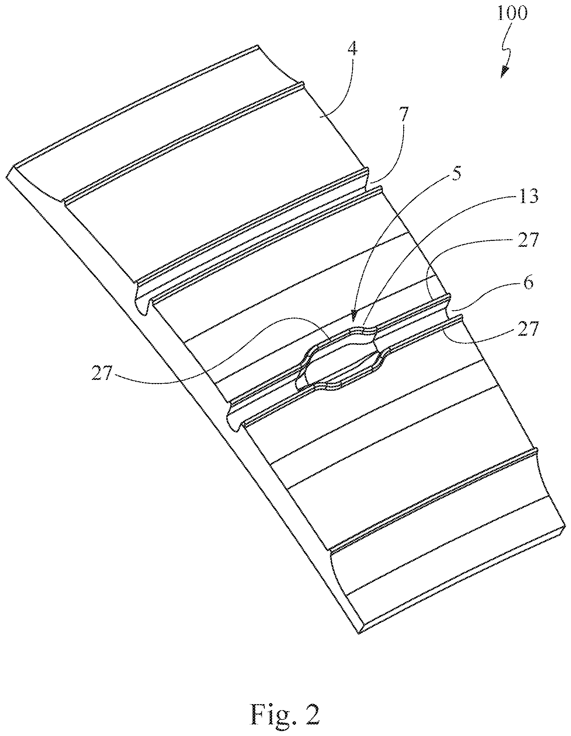

The wear indicator 5 of the sidewall, as better shown in figures 2-3, comprises at least a first circumferential groove 6 provided with at least one portion 13 with increased section.

As better described hereinafter, in the embodiment shown in figure 1, the first circumferential groove 6 has four portions 13 an increased section, angularly staggered of about 90°.

The first circumferential groove 6 has a substantially continuous circumferential development around the rotation axis of the tyre.

For "substantially continuous" profile in the context of the present invention it is meant that along its extension, that is to say along a circumference concentric to the rotation axis of the tyre, the first groove 6 is continuous or has small negligible interruptions for example lower than 5% of the extension of the aforementioned circumference.

The first groove 6 further takes the role of continuously monitoring the wear status of the sidewall 3 for the whole circumferential extension of the sidewall, differently than the known sidewall wear indicators wherein it is possible to know the thickness of the sidewall only in proximity of the wear indicator itself.

The first circumferential groove 6 is located on the sidewall 5 of the tyre 1 within a range having a radial extension of 80 mm comprising the point of maximum chord of the tyre.

Always referring to the embodiment of figure 1, the first circumferential groove 6 is located on the sidewall 3 of the tyre in a radially outer position relative to the point of maximum chord.

Preferably, the first circumferential groove 6 is located on the sidewall 3 of the tyre above the point E of maximum chord, within a range having a radial extension of 20 mm.

The present choice is given by the need of not having relevant structural discontinuities in the point of maximum stress of the sidewall 3 of the tyre, typically localized in proximity of the maximum chord.

Always referring to the embodiment shown in figure 1, the first circumferential groove 6 has a maximum width I of between about 0,5 mm and about 5 mm extremes being included.

Preferably, the first circumferential groove 6 has a maximum width I comprised between about 1 mm and about 3 mm, extremes being included.

The first circumferential groove 6 has a channel depth p. The channel depth p is comprised between about 1 mm and about 7 mm, preferably between about 2.5 and about 5 mm, extremes being included.

In case the first circumferential groove 6 and the portions 13 with increased portions have radially protruding ribs or upper lips 27, as it is in the case shown in figures, the measure of the depth is taken starting from the plane tangent to the radially external portions of the sidewall itself, adjacent respectively to the first circumferential groove 6 or to the portions with increased section.

Excepting the portions 13 with increased section, better described hereinafter, in the embodiment shown in figure 1, the first circumferential groove 6 has a constant depth, equal to channel depth p, for its whole circumferential extension.

In the embodiment shown in figure 1 there are more increased section portions 13, in detail four angularly staggered portions 13 with increased section of about 90°.

Preferably, the number of portions 13 with increased section in the same first circumferential groove 6 ranges from three to twelve, and more preferably from four to eight.

For the sake of simplicity of illustration in figures 2-4 is shown only one portion 13 with increased section, being intended that there can be more than one for every first circumferential groove 6, and that this shall be also valid for the other portions 13 on the first circumferential groove 6.

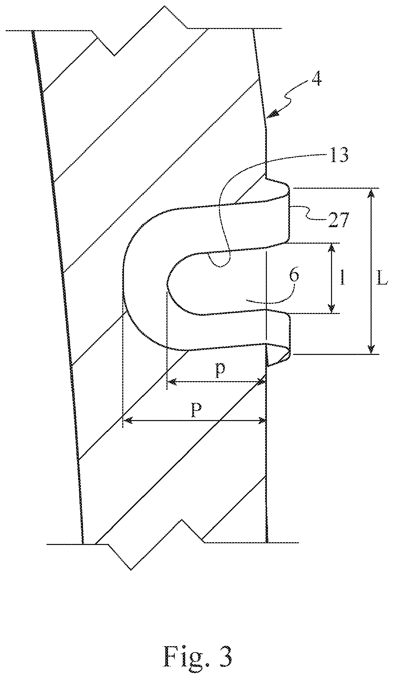

The portion 13 an increased section, shown in figures 3, 4 has a localized maximum depth P greater than the channel depth p of the first circumferential groove 6.

In other words, the localized maximum depth P of the portion 13 with increased section exceeds the channel depth p of the first circumferential groove 6.

The localized maximum depth P of the portion 13 an increased section is, further, in relation with channel depth p of the first groove 6 in such a way that the localized maximum depth P is comprised in the range between 1.2p and 5p, preferably between 2p and 4p extremes being included.

Preferably, the localized maximum depth P is less than 8 mm and greater than 4 mm, in such a way it is possible to obtain a measurement of the amount of compound abraded in the position of maximal criticality of the sidewall 5 of the tyre, very close to the maximum possible limit.

The portion with increased section 13 has a maximum width L (measured in a substantially radial direction along the sidewall) comprised between about 3 mm and about 10 mm.

Always referring to the embodiment of figures 3, 4, the portion with increased section has a shape elongated in circumferential direction, but it could have other shapes without departing from the scope of protection of the present invention.

Each one portion 13 with increased section has a circumferential extension comprised between about 3 mm and about 30 mm. Preferably, each portion with increased section has a circumferential extension comprised between about 5 mm and about 20 mm.

Apart from the connecting stretches with the remaining portions of the first circumferential groove 6, the portion with increased section 13, for a same depth, has a constant width along its circumferential extension.

In the embodiment shown in figures, the lateral walls of the portion with increased section are further connected to the bottom of the portion with increased section itself in such a way to further reduce the localized concentration of the stresses.

With the increase of the depth, that is to say by moving from the external outer surface of the portion with increased section 13 towards the centre of the tyre, the width L of the portion with increased section is substantially constant, but it could variate without departing from the scope of protection of the present invention.

Always referring to the embodiment shown in figures 1 and 4 it can be seen as the sidewall wear indicator 5, has a second circumferential groove 7, located externally to the first circumferential groove 6.

In said embodiment, the second circumferential groove 7 does not have any portion 13 with increased section.

Alternatively, the second circumferential groove 7 could have one or more portions 13 with increased section.

In this last case, the portions with increased section 13 of the second circumferential groove would be angularly staggered relative to the portions with increased section of the first circumferential groove 6.

The tyres for heavy load vehicles according to the present invention are for example suitable for fitting vehicles used in a city environment, typically urban buses or vehicles for goods transportation both on steer or drive axles. Said tyres can have for example the following sizes: 275/70 R 22.5; 295/80 R 22.5; 305/70 R 22.5; 265/75 R19.5; 285/75 R19.5; 215/75 R17.5; 225/75 R17.5.

### Example

By way of example it has been realized a tyre according to an embodiment of the invention.

The tyre 1 that has been made has a size 275/70 R 22.5 and for performing the measurements has been inflated to a pressure of 9 bar.

The tyre 1 that has been made has one sidewall 3 with a portion with increased thickness4.

The portion 4 di sidewall extends from the point of maximum chord of the tyre in a direction of the tread band 2 for about 50 mm and in a direction of the tyre bead for about 10 mm.

In the portion 4, the sidewall 3 has a maximum thickness S of about 8 mm, measured from the plane containing the carcass cords up to the externally outset part of the sidewall itself, arranged on the normal to said plane.

In the portion 4 is further present a first circumferential groove 6 with width of about 3 mm and depth of about 3.5mm.

The first groove 6 has four portions 13 an increased section, identical, circumferentially staggered of 90°. Each one portion 13 an increased section 13 has an elongated shape that extends circumferentially for about 12 mm.

Each one portion 13 an increased section has further a localized maximum depth P of about 5 mm and a width of about 5 mm.

The portion 4 has further a second groove 7 located externally to the first groove 6.

The second groove 7 is without portions 13 an increased section and has width of 3 mm and depth of about 4 mm.

The present invention has been described referring to some embodiments. Different adaptations can be brought to the detailed described embodiments, anyway remaining within the scope of protection of the invention, provided by the following claims.

## Claims

1. Tyre (1) for heavy load vehicle wheels comprising a tread band (2) and two sidewalls (3) opposite to each other relative to said tread band (2); at least one of said sidewalls (2) comprising a portion of sidewall (4) provided with at least one sidewall wear indicator (5), **characterized in that** said sidewall wear indicator (5) comprises at least a first circumferential groove (6) comprising at least one portion (13) with increased section; said first circumferential groove (6) has a substantial continuous circumferential development around the rotation axis of the tyre which means that along a circumference concentric to the rotation axis, the first circumferential groove (6) is continuous or has small interruptions lower than 5% of the extension of said circumference.

2. Tyre (1) according to claim 1, wherein said at least one portion (13) with increased section has a circumferential extension comprised between about 3 mm and about 30 mm.

3. Tyre (1) according to claim 1 or 2, **characterized in that** said circumferential groove (6) has a channel depth p and said portion (13) an increased section has a localized maximum depth P, with p<P.

4. Tyre (1) according to claim 3, **characterized in that** said localized maximum depth P is comprised in the range between 1.2p and 5p.

5. Tyre (1) according to claim 3, **characterized in that** said channel depth p is comprised between about 1 mm and about 7 mm.

6. Tyre (1) according to any one of the claims from 1 to 5, **characterized in that** said at least a first circumferential groove (6) has a maximum width I of between about 0,5 mm and about 5mm.

7. Tyre (1) according to any one of the claims from 1 to 6, **characterized in that** said localized maximum depth P is smaller than 8 mm.

8. Tyre (1) according to any one of the claims from 1 to 7, **characterized in that** said at least a first circumferential groove (6) is located on the sidewall (3) of the tyre within a range having a radial extension of 80 mm comprising the point of maximum chord of said tyre (1).

9. Tyre (1) according to claim 8, **characterized in that** said at least a first circumferential groove (6) is located on the sidewall (3) of the tyre in a radially outer position relative to the point of maximum chord within a range having a radial extension of 20 mm.

10. Tyre (1) according to any one of the claims from 1 to 9, **characterized in that** at least a portion with increased section (13) has a width L comprised in the range between 3 mm and 10 mm.

11. Tyre (1) according to any one of the claims from 1 to 10, **characterized in that** said portion of sidewall (4) has an increased thickness and extends from the point of maximum chord for at least 50mm towards the tread band and for at most 50mm towards the tyre bead.

12. Tyre (1) according to any one of the claims from 1 to 11, **characterized in that** said sidewall wear indicator (5) comprises at least a second circumferential groove (7), located outwardly relative to the first circumferential groove (6).

13. Tyre (1) according to claim 12, **characterized in that** said second circumferential groove (7) comprises at least one portion (13) with increased section.

14. Sidewall for heavy load vehicle wheels comprising a portion of sidewall (4) provided with at least one sidewall wear indicator (5), **characterized in that** said sidewall wear indicator (5) comprises at least a first circumferential groove (6) comprising at least one portion (13) with increased section, said first circumferential groove (6) has a substantial continuous circumferential development around the rotation axis of the tyre which means that along a circumference concentric to the rotation axis, the first circumferential groove (6) is continuous or has small interruptions lower than 5% of the extension of said circumference.

## Patentansprüche

1. Reifen (1) für Räder von Schwerlastfahrzeugen umfassend einen Laufflächenring (2) und zwei Seitenwände (3), die einander in Bezug auf den Laufflächenring (2) entgegengesetzt sind;
wobei zumindest eine der Seitenwände (2) einen Seitenwandabschnitt (4)
umfasst, der mit zumindest einem Seitenwand-Verschleißanzeiger (5) versehen ist, **dadurch gekennzeichnet, dass** der Seitenwand-Verschleißanzeiger (5) zumindest eine erste umlaufende Nut (6) mit zumindest einem Abschnitt (13) mit vergrößertem Querschnitt umfasst; wobei die erste umlaufende Nut (6) eine im Wesentlichen durchgehende Umfangserstreckung um die Drehachse des Reifens herum aufweist, was bedeutet, dass entlang eines Umfangs, der konzentrisch mit der Drehachse ist, die erste umlaufende Nut (6) durchgehend ist oder kleine Unterbrechungen mit weniger als 5 % der Erstreckung des Umfangs aufweist.

2. Reifen (1) nach Anspruch 1, wobei der zumindest eine Abschnitt (13) mit vergrößertem Querschnitt eine Umfangserstreckung zwischen etwa 3 mm und etwa 30 mm aufweist.

3. Reifen (1) nach Anspruch 1 oder 2, **dadurch gekennzeichnet, dass** die umlaufende Nut (6) eine Kanaltiefe p aufweist, und der Abschnitt (13) mit vergrößertem Querschnitt eine lokale maximale Tiefe P aufweist, wobei p < P ist.

4. Reifen (1) nach Anspruch 3, **dadurch gekennzeichnet, dass** die lokale maximale Tiefe P in dem Bereich zwischen 1,2p und 5p liegt.

5. Reifen (1) nach Anspruch 3, **dadurch gekennzeichnet, dass** die Kanaltiefe p zwischen etwa 1 mm und etwa 7 mm liegt.

6. Reifen (1) nach einem der Ansprüche 1 bis 5, **dadurch gekennzeichnet, dass** die zumindest eine erste umlaufende Nut (6) eine maximale Breite I zwischen etwa 0,5 mm und etwa 5 mm aufweist.

7. Reifen (1) nach einem der Ansprüche 1 bis 6, **dadurch gekennzeichnet, dass** die lokale maximale Tiefe P kleiner als 8 mm ist.

8. Reifen (1) nach einem der Ansprüche 1 bis 7, **dadurch gekennzeichnet, dass** die zumindest eine erste umlaufende Nut (6) sich an der Seitenwand (3) des Reifens befindet, innerhalb eines Bereichs mit einer radialen Erstreckung von 80 mm, umfassend den Punkt der maximalen Breite des Reifens (1).

9. Reifen (1) nach Anspruch 8, **dadurch gekennzeichnet, dass** die zumindest eine erste umlaufende Nut (6) sich an der Seitenwand (3) des Reifens in einer radial äußeren Position relativ zu dem Punkt der maximalen Breite innerhalb eines Bereichs mit einer radialen Erstreckung von 20 mm befindet.

10. Reifen (1) nach einem der Ansprüche 1 bis 9, **dadurch gekennzeichnet, dass** zumindest ein Abschnitt mit vergrößertem Querschnitt (13) eine Breite L in dem Bereich zwischen 3 mm und 10 mm aufweist.

11. Reifen (1) nach einem der Ansprüche 1 bis 10, **dadurch gekennzeichnet, dass** der Seitenwandabschnitt (4) eine vergrößerte Dicke aufweist und sich von dem Punkt der maximalen Breite über zumindest 50 mm zu dem Laufflächenring hin erstreckt und über höchstens 50 mm zu dem Reifenwulst hin erstreckt.

12. Reifen (1) nach einem der Ansprüche 1 bis 11, **dadurch gekennzeichnet, dass** der Seitenwand-Verschleißanzeiger (5) zumindest eine zweite umlaufende Nut (7) umfasst, die sich relativ zu der ersten umlaufenden Nut (6) nach außen befindet.

13. Reifen (1) nach Anspruch 12, **dadurch gekennzeichnet, dass** die zweite umlaufende Nut (7) zumindest einen Abschnitt (13) mit vergrößertem Querschnitt umfasst.

14. Seitenwand für Räder von Schwerlastfahrzeugen, umfassend einen Seitenwandabschnitt (4), der mit zumindest einem Seitenwand-Verschleißanzeiger (5) versehen ist, **dadurch gekennzeichnet, dass** der Seitenwand-Verschleißanzeiger (5) zumindest eine erste umlaufende Nut (6) mit zumindest einem Abschnitt (13) mit vergrößertem Querschnitt umfasst; wobei die erste umlaufende Nut (6) eine im Wesentlichen durchgehende Umfangserstreckung um die Drehachse des Reifens herum aufweist, was bedeutet, dass entlang eines Umfangs, der konzentrisch mit der Drehachse ist, die erste umlaufende Nut (6) durchgehend ist oder kleine Unterbrechungen mit weniger als 5 % der Erstreckung des Umfangs aufweist.

## Revendications

1. Pneu (1) pour roues de véhicule poids lourd comprenant une bande de roulement (2) et deux flancs (3) opposés l'un à l'autre par rapport à ladite bande de roulement (2) ; au moins l'un desdits flancs (2) comprenant une partie de flanc (4) pourvue d'au moins un indicateur d'usure de flanc (5), **caractérisé en ce que** ledit indicateur d'usure de flanc (5) comprend au moins une première rainure circonférentielle (6) comprenant au moins une partie (13) à section accrue ; ladite première rainure circonférentielle (6) présente un développement circonférentiel essentiellement continu autour de l'axe de rotation du pneu ce qui signifie que, le long d'une circonférence concentrique à l'axe de rotation, la première rainure circonférentielle (6) est continue ou présente de petites interruptions inférieures à 5% de l'extension de ladite circonférence.

2. Pneu (1) selon la revendication 1, dans lequel ladite au moins une partie (13) à section accrue présente une extension circonférentielle comprise entre environ 3 mm et environ 30 mm.

3. Pneu (1) selon la revendication 1 ou 2, **caractérisé en ce que** ladite rainure circonférentielle (6) présente une profondeur de canal p et ladite partie (13) à section accrue présente une profondeur maximale localisée P, avec p<P.

4. Pneu (1) selon la revendication 3, **caractérisé en ce que** ladite profondeur maximale localisée P est comprise dans la plage allant de 1,2p à 5p.

5. Pneu (1) selon la revendication 3, **caractérisé en ce que** ladite profondeur de canal p est comprise entre environ 1 mm et environ 7 mm.

6. Pneu (1) selon l'une quelconque des revendications 1 à 5, **caractérisé en ce que** ladite au moins une première rainure circonférentielle (6) présente une largeur maximale 1 comprise entre environ 0,5 mm et environ 5 mm.

7. Pneu (1) selon l'une quelconque des revendications 1 à 6, **caractérisé en ce que** ladite profondeur maximale localisée P est inférieure à 8 mm.

8. Pneu (1) selon l'une quelconque des revendications 1 à 7, **caractérisé en ce que** ladite au moins une première rainure circonférentielle (6) est située sur le flanc (3) du pneu dans une plage ayant une extension radiale de 80 mm comprenant le point de câble maximal dudit pneu (1).

9. Pneu (1) selon la revendication 8, **caractérisé en ce que** ladite au moins une première rainure circonférentielle (6) est située sur le flanc (3) du pneu dans une position radialement extérieure par rapport au point de câble maximal dans une plage ayant une extension radiale de 20 mm.

10. Pneu (1) selon l'une quelconque des revendications 1 à 9, **caractérisé en ce qu'**au moins une partie à section accrue (13) présente une largeur L comprise dans la plage allant de 3 mm à 10 mm.

11. Pneu (1) selon l'une quelconque des revendications 1 à 10, **caractérisé en ce que** ladite partie de flanc (4) présente une épaisseur accrue et s'étend depuis le point de câble maximal sur au moins 50 mm vers la bande de roulement et sur au plus 50 mm vers le talon de pneu.

12. Pneu (1) selon l'une quelconque des revendications 1 à 11, **caractérisé en ce que** ledit indicateur d'usure de flanc (5) comprend au moins une deuxième rainure circonférentielle (7), située vers l'extérieur par rapport à la première rainure circonférentielle (6).

13. Pneu (1) selon la revendication 12, **caractérisé en ce que** ladite deuxième rainure circonférentielle (7) comprend au moins une partie (13) à section accrue.

14. Flanc pour roues de véhicule poids lourd comprenant une partie de flanc (4) pourvue d'au moins un indicateur d'usure de flanc (5), **caractérisé en ce que** ledit indicateur d'usure de flanc (5) comprend au moins une première rainure circonférentielle (6) comprenant au moins une partie (13) à section accrue, ladite première rainure circonférentielle (6) présente un développement circonférentiel essentiellement continu autour de l'axe de rotation du pneu ce qui signifie que, le long d'une circonférence concentrique à l'axe de rotation, la première rainure circonférentielle (6) est continue ou présente de petites interruptions inférieures à 5% de l'extension de ladite circonférence.
